# DEMANDE DE BREVET EUROPEEN

(11) **EP 0 940 979 A1**
(43) Date de publication de la demande: **08.09.1999**
(21) Numéro de dépôt: 99400510.6
(22) Date de dépôt: 03.03.1999
(51) Int. Cl.: H04N 5/272

(54) **Procédé et dispositif de remplacement de panneaux cibles dans une séquence vidéo**

(30) Priorité: 06.03.1998 FR 9802781
(71) Demandeur: Symah Vision, 92170 Vanves (FR)
(72) Inventeur: Richard, Gilles, 78220 Viroflay (FR)
(74) Mandataire: Fort, Jacques

(57) **Abrégé**

Le procédé de remplacement de panneau cible dans les images d'une séquence vidéo est utilisable pendant les modifications de position du panneau dans la scène. On détermine une transformation globale prédite à partir d'une image de référence mémorisée en supposant la vitesse de modification constante, on élabore une image modifiée en appliquant la transformation à l'image de référence et on ajuste la prédiction par analyse globale de l'image. Puis on reconnaît la représentation du panneau à partir de sa couleur et on reconstitue ses contours par extraction et segmentation et on substitue, à la représentation du panneau, la représentation du modèle à incruster, après avoir soumis ce modèle à une transformation.

## Description

La présente invention a pour objet un procédé et un dispositif de remplacement de panneaux cibles dans les images d'une séquence vidéo, généralement fournie par une caméra, le terme "panneau" désignant une zone identifiable et non déformable.

On connaît déjà (US-A-5 353 392 ou WO-A-91/15921) de tels procédé et dispositif, applicables aussi bien aux images prises en studio qu'aux images prises en extérieur, notamment sur un stade ou un circuit. Le panneau cible (panneau publicitaire par exemple) est reconnu automatiquement dans l'image par un processus de reconnaissance de forme utilisant des points caractéristiques situés dans le panneau cible ou à proximité. Ces points caractéristiques peuvent être des graphèmes dans la cible, des lignes de contraste de lumière ou de couleur (par exemple les bords). On peut imposer à la cible une couleur, généralement le bleu ou le vert, de teinte unie ou non, qui ne se retrouve pas dans les parties mobiles de la scène afin d'autoriser le traitement des masquages par ces parties mobiles par la technique dite "chroma key" ou "écran bleu".

Le panneau cible, une fois identifié, est remplacé dans l'image vidéo par une représentation d'un modèle stationnaire et mémorisé ou d'une séquence vidéo. Cette représentation est obtenue en déformant le modèle ou la séquence pour qu'elle s'adapte au panneau cible tel qu'il est vu dans l'image vidéo où la substitution doit être faite.

Pour faciliter la localisation du panneau cible, les documents US-A-5436672 et EP-A-0 684732 enseignent l'utilisation de techniques de prédiction et de points significatifs répartis dans l'ensemble de l'image vidéo à modifier.

La présente invention vise à fournir un procédé et un dispositif permettant de permettre la substitution d'un panneau cible de forme géométrique simple même lorsque ce dernier est susceptible de se déplacer par rapport à la scène générale vue par la caméra, y compris lorsque les conditions géométriques de prise de vue par la caméra changent.

Ce dernier cas est notamment celui où la caméra subit, au cours de la prise de vue, des mouvements angulaires (panoramique, en élévation et moins souvent en rotation autour de l'axe optique), des déplacements en x, y et z et/ou des modifications de focale, c'est-à-dire de zoom. Le premier cas est, notamment, celui où la cible est portée par un mobile qui se déplace dans un environnement fixe et celui où un acteur peut déplacer le panneau, l'amener dans le champ de la caméra et l'en sortir, etc...

L'invention utilise pour cela le fait que les déplacements de la caméra et ceux d'un panneau cible dans le champ s'effectuent toujours à accélération limitée et que les prédictions faites sur l'ensemble de l'image constituent une première approximation des modifications d'emplacement et d'aspect du panneau cible.

L'invention propose un procédé suivant lequel, pour des images courantes successives d'une séquence :
- on détermine une transformation globale prédite à partir d'une image de référence mémorisée en supposant la vitesse de modification constante, on élabore une image modifiée en appliquant la transformation à l'image de référence et on ajuste la prédiction par analyse globale d'image, ce qui permet d'utiliser le mouvement réel,
- on reconnaît la représentation du panneau à partir de sa couleur et on reconstitue ses contours par extraction et segmentation, et
- après vérification de cohérence, on substitue, à la représentation du panneau, la représentation du modèle à incruster, après avoir soumis ce modèle à une transformation fonction de la représentation reconnu du panneau cible.

L'ajustement peut s'effectuer notamment par la méthode du flot optique qui permet de disposer de prédicteurs répartis dans toute la partie structurée de la scène commune à deux images successives.

Comme on l'a indiqué plus haut, divers modèles peuvent être utilisés.

En particulier, le modèle peut provenir d'une caméra vidéo ou d'un magnétoscope fournissant des images animées. Dans ce cas, on utilisera généralement une cible rectangulaire de format 4x3 ou 16x9 dans laquelle le modèle peut s'incruster exactement.

Dans certains cas, et notamment lorsque la scène vue par la caméra comporte des acteurs nombreux et/ou vus en gros plan, le procédé ci-dessus peut être insuffisamment précis. Pour améliorer les performances du procédé, il peut être prévu une étape supplémentaire de poursuite locale ou absolue. Au cours de cette étape on peut notamment :
- calculer une transformation prédite, éventuellement par l'une ou l'autre de plusieurs méthodes telles que le filtrage de Kalman sur des images successives et la reconnaissance de forme (déjà disponible) ;
- affiner l'estimation de points d'intérêt du panneau cible par corrélation à deux dimensions sur des voisinages des points d'intérêt ; et
- calculer la transformation géométrique reliant la position des points d'intérêt dans l'image de référence et dans l'image courante.

L'invention a également pour objet un appareil comportant des moyens matériels et logiciels permettant de mettre en oeuvre les étapes ci-dessus. L'implémentation du procédé peut s'effectuer avec des architectures très variées. Toutefois il est avantageux, lorsqu'on cherche à utiliser des matériels du commerce, de répartir les différentes fonctions sur plusieurs micro-ordinateurs tels que des ordinateurs personnels ou PC reliés par un réseau local utilisant un protocole connu, tel que Ethernet.

L'invention sera mieux comprise à la lecture de la description qui suit de modes particuliers de réalisation, donnés à titre d'exemples non limitatifs. La description se réfère aux dessins qui l'accompagnent, dans lesquels :
- la figure 1 est un schéma destiné à montrer les paramètres qui interviennent dans la prise de vue d'une scène comportant un panneau cible mobile par rapport au fond ;
- la figure 2 est un synoptique de principe ;
- la figure 3 montre une architecture matérielle possible du dispositif.

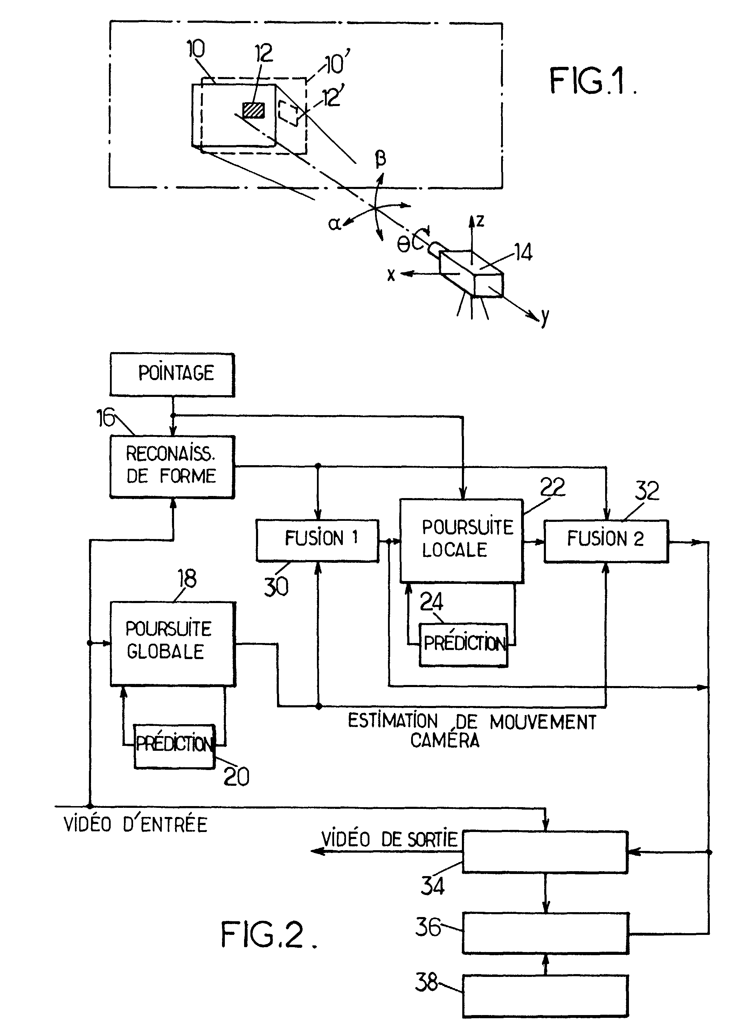

Le procédé et le dispositif ont pour but de permettre d'insérer en direct un modèle ou "fenêtre" virtuelle dans l'image vue par une caméra ou mémorisée dans un magnétoscope, en substitution à une cible. Comme le montre la figure 1, elle permet en particulier de remplacer un panneau 12 situé dans le champ 10 d'une caméra 14 même lorsque :
- les conditions de prises de vues changent au cours d'une séquence d'image
- le panneau 12 subit des translations ou des rotations par rapport au reste de la scène observée, par exemple, lorsqu'il vient dans la position indiquée par 12' alors que le champ de la caméra devient celui indiqué en 10'.

Les déplacements de la caméra peuvent notamment être des mouvements panoramique α, en élévation β et moins souvent en rotation θ autour de l'axe, ainsi que des déplacements en x, y et z ; il s'y ajoute des changements de focale.

Il est nécessaire que le modèle inséré suive les mouvements de la caméra et les déplacements de la cible.

De plus il est souhaitable que ces opérations soient effectuées uniquement par des techniques de traitement d'images, sans capteurs de déplacements qui rendent le système très imparfait dans de nombreuses situations, notamment en présence de vibrations à basse-fréquence (fréquentes à proximité des gradins d'un stade) et lorsque la focale de la caméra est très longue.

Le procédé et le dispositif peuvent être regardés comme comportant plusieurs modules, définis ci-après, ayant chacun une fonction déterminée. Dans certains cas, il suffit de mettre en oeuvre certains des modules pour effectuer la substitution avec une précision suffisante.
Un module de reconnaissance de forme a pour fonction d'identifier et de localiser le panneau cible dans l'image fournie par la caméra ;
un module de poursuite globale mesure le mouvement global de l'image fournie par la caméra et donc détermine en permanence les variations de focale de la caméra et la translation relative entre deux trames consécutives ;
un module de poursuite absolue mesure le mouvement local du panneau et affine la précision sur la position de ses sommets ou coins lorsque cela est nécessaire pour améliorer les performances du dispositif ;
un module de fusion de données estime la position et l'aspect du panneau cible dans l'image à chaque trame, à partir des informations fournies par le module (ou les modules) de poursuite et par le module de reconnaissance des formes ;
enfin un module d'incrustation met à l'échelle le modèle mémorisé ou provenant d'une source de séquence vidéo, lui donne éventuellement une déformation en perspective, et le substitue à la cible dans l'image.

Ces modules seront successivement décrits.

### Module de reconnaissance de forme

La description qui suit correspond essentiellement au cas particulier où le panneau cible à remplacer est de forme rectangulaire. Mais le procédé serait également applicable non seulement à un autre quadrilatère, mais aussi à tout polygone à côtés rectilignes.

La première opération effectuée par le module de reconnaissance de forme 16 consiste à transformer l'image vidéo d'origine en une image binaire dans laquelle tous les pixels visibles de la surface du panneau cible, présentant une couleur particulière, ou une de quelque couleur particulière, sont déclarés actifs, en leur affectant une valeur différente de celle affectée aux pixels du reste de la scène vue par la caméra en deux dimensions. En général, le panneau sera vert ou bleu, de teinte unie ou présentant des nuances permettant de former des inscriptions.

Sur ces images binaires est effectuée une extraction de contour, consistant à ne considérer comme actifs que les pixels appartenant au périmètre du panneau. On obtient ainsi une image binaire, qui est convertie par chaînage en des listes de pixels, constitués de telle façon que deux pixels consécutifs d'une chaîne soient connexes.

Par segmentation, les chaînes sont ensuite décomposées en une collection de segments de droite, ce qui est justifié lorsque le panneau est constitué par un polygone et est particulièrement simple lorsque le périmètre du panneau cible se présente sous forme d'un quadrilatère dans l'image.

Les opérations ci-dessus peuvent suffire à identifier le panneau cible, lorsqu'il n'est pas partiellement masqué et qu'il constitue la seule fraction de l'image observée qui présente la couleur de sélection. Plus souvent, une étape de mise en correspondance ou "matching" sera nécessaire, soit parce qu'il y a plusieurs panneaux possibles dans une scène, soit encore parce que d'autres fractions de l'image peuvent présenter la même couleur.
Cette mise en correspondance implique qu'ait été désigné manuellement les sommets du panneau (par exemple les quatre coins d'un quadrilatère) pendant une phase d'initialisation. La mise en correspondance est alors constituée par la sélection de celui des quadrilatères proposés par la phase de segmentation qui présente le facteur de forme le plus proche de celui du panneau défini initialement.

Une fois le meilleur quadrilatère choisi, la position des quatre coins du panneau cible correspondant est envoyée au module de fusion de données, en général avec l'indication d'un taux de vraisemblance, permettant d'effectuer une vérification.

### Module de poursuite globale

Le module de poursuite globale 18 est programmé de façon à effectuer en séquences une série d'opérations.

La première opération consiste à sous-échantillonner spatialement l'image, par exemple d'un facteur 8 par octaves successives, de façon à réduire la quantité de pixels traités et à diminuer le bruit grâce au filtrage passe-bas que provoque le sous-échantillonnage.

La suite des opérations exige de disposer d'une image de référence, par rapport à laquelle s'effectueront ensuite les estimations de modification des conditions de prises de vues (translation, rotation et changement de focale). La mémorisation d'une image de référence est effectuée périodiquement en recopiant l'image courante dans plusieurs cas :
- lorsque l'image courante est la première image traitée d'une séquence,
- lorsque l'image courante devient trop différente de l'image de référence, du fait par exemple d'un déplacement ou d'un changement de focale dépassant un seuil déterminé, de la présence d'obstacles,
- lorsque l'image de référence est trop ancienne, par exemple remonte à plus de deux secondes.

Dans ces conditions, les rotations de la caméra et les translations en x et z de la caméra se traduiront, dans l'image 2D, de façon quasi identique.

Le module calcule ensuite une transformation prédite en partant de l'hypothèse que la transformation s'effectue à vitesse constante sur l'ensemble des paramètres. La prédiction sur la seconde image s'effectue simplement en supposant la vitesse nulle.

L'image de référence est alors rééchantillonnée en lui appliquant la transformée prédite. On obtient ainsi une image déformée et déplacée qui ressemble à l'image courante.

L'étape suivante consiste à faire une estimation grossière de la translation qui permet de passer de l'image de référence à l'image courante, par un processus de corrélation. Divers critères peuvent être utilisés pour cette opération. Il est avantageux d'utiliser un critère de distance saturée qui a l'avantage d'être robuste en présence de bruit.

Un second rééchantillonnage de l'image de référence est alors effectué, mais en utilisant l'estimation grossière disponible et non plus simplement une prédiction.

Il reste à estimer de façon précise la transformation permettant de passer de l'image de référence à l'image courante. Plusieurs itérations, par exemple 3, peuvent être effectuées, chaque fois avec l'échantillonnage de l'image de référence. L'estimation précise de la transformation peut notamment utiliser la méthode des gradients, dite du flot optique, tant qu'une description est par exemple donnée dans l'article de Brian G. Shunk "The Image Flow Constraint Equation", Computer Vision, Graphics and Image Processing 35, 20-46 (1986) pages 20-46.

Enfin, la transformation obtenue est envoyée au module de fusion de données.

### Module de poursuite locale

Le module de poursuite locale 22 est destiné à estimer de façon précise la transformation subie par le panneau cible par rapport à sa représentation dans l'image de référence, lorsque la reconnaissance de forme ne donne pas de résultat satisfaisant ou encore pour confirmer le résultat obtenu par reconnaissance de forme, lorsque le taux de ressemblance indiqué est faible.

L'indication initiale du panneau à poursuivre peut s'effectuer manuellement. Un opérateur pointe alors les sommets du panneau cible dans l'image. L'indication du panneau peut en principe aussi être effectuée en utilisant la comparaison entre une couleur mémorisée et la couleur des pixels, donc à partir des indications données par le module de reconnaissance de forme, au début de chaque séquence. Mais cette approche est tributaire d'un éclairage homogène du panneau.

En fonctionnement courant, la transformation prédite est obtenue en utilisant un prédicteur fondé sur des hypothèses de continuité, à partir des transformations passées. On peut notamment utiliser un filtrage de Kalman. Dans certains cas, on utilisera simultanément deux prédicteurs, prenant l'un de la reconnaissance de forme, l'autre du filtrage de Kalman. A partir de la transformation prédite estimée la meilleure, cette transformation est appliquée à une collection de points non ambigus sélectionnés par l'utilisateur pendant une phase d'initialisation, qu'on qualifiera de "points d'intérêt". Les points correspondent à des zones de fort contraste de luminance et/ou de chrominance, généralement au bord du panneau ou à proximité de ce bord. En particulier, les points peuvent être constitués par les coins du panneau, identifiés sur les vignettes de 15 x 15 pixels.

La position réelle de tous les points d'intérêt présents dans l'image courante doit ensuite être définie exactement à partir de l'estimation fondée sur la transformation prédite. Pour cela on peut notamment effectuer une corrélation en deux dimensions entre une vignette prélevée dans l'image courante et constituant un voisinage du point d'intérêt et une vignette prélevée dans une image de référence numérisée une fois pour toutes, pendant la phase d'initialisation.

Lorsque les déplacements en y et/ou la focale sont susceptibles de changer de façon importante, il est préférable de mémoriser l'image de référence à plusieurs échelles. La corrélation est alors effectuée entre les points prédits dans l'image courante et les points prédits dans celle des représentations de l'image de référence qui est à l'échelle appropriée, sélectionnée en fonction de la transformée prédite.

Une fois définie la position réelle des points d'intérêt dans l'image courante, le module est à même de calculer la transformation géométrique qui relie cette position à celle des points d'intérêt dans l'image de référence, par exemple à l'aide d'une méthode des moindres carrés, avantageusement appliquée de façon itérative, par exemple trois fois, afin de rejeter les points aberrants.

### Module de fusion de données

Le module de fusion de données est prévu pour estimer la position et l'aspect du panneau cible dans chaque trame
- soit à partir des indications fournies par le module 16 de reconnaissance de forme, si la qualité d'information donnée par ce module est suffisante, comme indiqué en 30 sur la figure 2,
- soit à partir de la dernière estimation correcte fournie par le module de reconnaissance de forme et des données fournies par le module de poursuite locale dans le cas contraire, comme indiqué en 32.

Pour effectuer le choix entre les deux approches, le module de fusion effectue un contrôle de qualité sur les informations produites par les modules 16 et 22.

Le contrôle de qualité peut être effectué par des critères de cohérence temporelle, permettant de déterminer si des modifications sont dues à des vibrations ou d'autres instabilités et d'évaluer le taux de ressemblance ou de validité évalué dans le module 16 ou 22.

Si la qualité du positionnement fourni par le module de reconnaissance de forme 16 est satisfaisante, le module de fusion effectue directement un lissage, pour donner un emplacement précis des points du quadrilatère, ce lissage s'effectuant par un filtrage passe-bas.

Si au contraire le module de reconnaissance de forme fournit un positionnement de qualité insuffisante, une extrapolation du résultat est effectuée à partir des données fournies par le module de poursuite locale.

Il peut encore être prévu d'extrapoler la dernière estimation correcte fournie par le module de reconnaissance de forme 16 à partir des données du module de poursuite globale si la qualité du positionnement fournie par extrapolation à partir des données du module de poursuite locale est insuffisante.

Dans tous les cas, une opération de lissage final est effectuée et les coordonnées des sommets sont transmises au module d'incrustation 34 et également au module 36 de mise en forme par changement d'échelle et déformation en perspective des images provenant d'une mémoire ou d'une séquence vidéo 38.

L'incrustation peut s'effectuer en utilisant une technique classique d'écran bleu ou chroma-key pour ne substituer, dans l'image courante, que les pixels du panneau cible qui ne sont pas masqués par un obstacle. Il n'est pas nécessaire de décrire içi les techniques utilisées, qui sont de pratique courante en télévision.

Comme on l'a indiqué plus haut, il n'est pas indispensable que le panneau soit de forme rectangulaire. Sans complication notable, on peut adopter un panneau polygonal ayant un nombre de côtés quelconque, voire même un panneau comportant une ouverture interne. Dans ce dernier cas, les modules effectueront la localisation des coins du panneau et des sommets de l'ouverture. Pour permettre une gestion simple d'un retour du panneau dans le champ après une sortie, il est avantageux d'imposer la contrainte que le panneau doit rester immobile dans la scène pendant toute la période où il est hors de champ de vision.

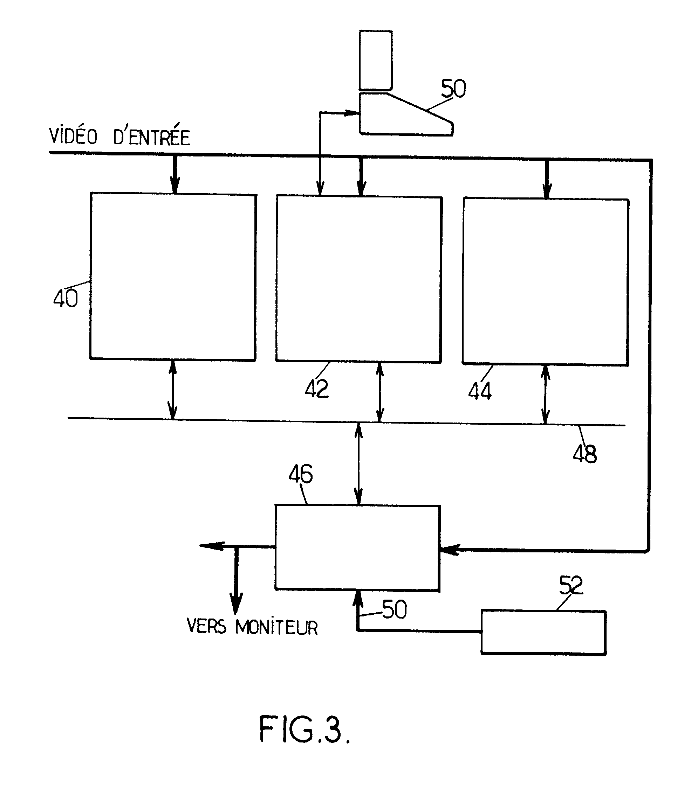

Les fonctionnalités des modules mentionnés ci-dessus peuvent être implémentées dans une architecture du genre montré en figure 3, constituée de plusieurs micro-ordinateurs 40, 42, 44 et 46 communiquant entre eux par un réseau local 48. Le premier des ordinateurs 40 peut être affecté à la reconnaissance des formes et à la fusion des données. Le second ordinateur 42 peut être relié à l'interface homme-machine 50 et être programmé pour réaliser la poursuite locale, qui n'est utilisée que dans certains cas. L'ordinateur 44 est programmé pour effectuer la poursuite globale. Enfin le dernier micro-ordinateur 46 réalise l'incrustation et comporte une entrée 50 de réception des images fixes ou animées provenant d'un organe 52 qui peut être une mémoire, un magnétoscope ou une caméra dont les images sont modifiées de façon qu'elles s'inscrivent exactement dans la représentation du panneau cible.

Dans le micro-ordinateur 42, la poursuite globale fonctionne en parallèle avec l'interface homme-machine.

Le dispositif peut être incorporé à un studio comportant le ou les moniteurs classiques, donnant à l'opérateur les images fournies par la caméra ou les caméras visant la scène réelle. Un moniteur supplémentaire permet de surveiller l'image de sortie. Enfin il peut être prévu plusieurs micro-ordinateurs 46 ou un ordinateur fonctionnant en temps partagé permettant de fournir, à partir d'un même flux vidéo d'entrée, plusieurs flux vidéo de sortie ayant des incrustations différentes, destinées à des domaines de diffusion différents. Enfin le traitement peut être distribué, les images d'origine étant envoyées accompagnées des informations fournies par le module de fusion à un diffuseur qui choisit les modèles à incruster.

## Revendications

1. Procédé de remplacement de panneau cible dans les images d'une séquence vidéo, utilisable pendant les modifications de position du panneau dans la scène, suivant lequel pour des images courantes successives d'une séquence :
(a)- on détermine une transformation globale prédite à partir d'une image de référence mémorisée en supposant la vitesse de modification constante, on élabore une image modifiée en appliquant la transformation à l'image de référence et on ajuste la prédiction par analyse globale de l'image ;
(b)- on reconnaît la représentation du panneau à partir de sa couleur et on reconstitue ses contours par extraction et segmentation ; et
(c)- après vérification de cohérence, on substitue, à la représentation du panneau, la représentation du modèle à incruster, après avoir soumis ce modèle à une transformation fonction de la représentation reconnue du panneau cible.

2. Procédé selon la revendication 1, caractérisé en ce que, de plus :
(d1)- on calcul une transformation locale prédite, éventuellement par l'une ou l'autre de plusieurs méthodes telles que le filtrage de Kalman sur des images précédentes successives ;
(d2)- on affine l'estimation de points d'intérêt du panneau cible par corrélation à deux dimensions sur des voisinages des points d'intérêt ; et
(d3)- on calcule la transformation géométrique reliant la position des points d'intérêt dans l'image de référence et dans l'image courante.

3. Procédé selon la revendication 1 ou 2, caractérisé en ce que l'on donne au panneau cible une couleur particulière et on l'identifie dans l'image courante à partir de cette couleur et de sa forme.

4. Procédé selon la revendication 1, 2 ou 3, caractérisé en ce qu'on donne au panneau modèle une forme réelle rectangulaire.

5. Procédé selon la revendication 4, caractérisé en ce que pour incruster un modèle provenant d'une caméra vidéo ou d'un magnétoscope fournissant des images animées, on utilise une cible rectangulaire de format 4x3 ou 16x9 dans laquelle le modèle peut s'incruster exactement.

6. Procédé selon l'une quelconque des revendications 1 à 5, caractérisé en ce qu'on détermine la transformation globale prédite par référence à une image de référence mémorisée périodiquement en recopiant l'image courante
- lorsque l'image courante est la première image traitée d'une séquence,
- lorsque l'image courante devient trop différente de l'image de référence, du fait par exemple d'un déplacement ou d'un changement de focale dépassant un seuil déterminé, de la présence d'obstacles,
- lorsque l'image de référence est ancienne.

7. Procédé selon la revendication 6, caractérisé en ce qu'après calcul d'une transformation prédite, on ré-échantillonne l'image de référence en lui appliquant la transformée prédite pour obtenir une image déformée et déplacée, puis on fait une estimation grossière de la translation pour passer de l'image de référence à l'image courante, par un processus de corrélation, on ré-échantillonne l'image de référence en utilisant l'estimation grossière disponible et non plus simplement une prédiction, et on estime la transformation permettant de passer de l'image de référence à l'image courante par plusieurs itérations fondées sur une approche de gradients.

8. Procédé selon la revendication 2, caractérisé en ce que l'étape (d2) est effectuée en corrélant des voisinages d'une représentation de l'image de référence parmi plusieurs représentations à des échelles différentes.

9. Procédé suivant la revendication 2 ou 8, caractérisé en ce qu'au cours de l'étape (c) on estime la position et l'aspect du panneau cible dans chaque trame
- soit à partir des indications fournies par reconnaissance de forme, si la qualité d'information donnée par ce module est suffisante
- soit à partir de la dernière estimation correcte fournie par le module de reconnaissance de forme et des données fournies par poursuite locale dans le cas contraire.

10. Dispositif de mise en oeuvre du procédé selon la revendication 1, caractérisé en ce qu'il comprend plusieurs micro-ordinateurs programmés de façon à remplir respectivement les fonctions de
reconnaissance de forme et fusion de données
poursuite globale
poursuite locale
mise en forme du modèle à incruster et incrustation de la représentation du modèle.
